Europäisches Patentamt

European Patent Office

Office européen des brevets

(19)

(11) **EP 1 076 252 A1**

(12) **EUROPÄISCHE PATENTANMELDUNG**

(43) Veröffentlichungstag:
 **14.02.2001 Patentblatt 2001/07**

(51) Int Cl.⁷: **G02B 6/293**

(21) Anmeldenummer: **99440223.8**

(22) Anmeldetag: **13.08.1999**

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(71) Anmelder: **ALCATEL**
 **75008 Paris (FR)**

(72) Erfinder: **Gehler, Jörg, Dr. rer. nat.**
 **70439 Stuttgart (DE)**

(74) Vertreter: **Menzietti, Domenico, Dipl.-Ing et al**
 **Alcatel**
 **Intellectual Property Department, Stuttgart**
 **Postfach 30 09 29**
 **70449 Stuttgart (DE)**

(54) **Getrimmtes integriertes optisches Vielstrahlinterferometer**

(57) Zum Trimmen eines aus einer Vielzahl ($N$) von Wellenleitern ($i$) bestehenden Wellenleiterphasengitters (1) eines integrierten optischen Vielstrahlinterferometers wird mindestens einer ($j$) dieser Wellenleiter ($i$) über einen Bereich ($B_j$) entlang dessen optischen Weglänge ($L_j$) nur durch dessen Kernbrechzahl ($n_j$) verändernden Bestrahlung behandelt. Dadurch entsteht eine definierte Phasenverschiebung ($\Delta\varphi_j$) des in diesem Wellenleiter ($j$) geführten Lichtsignals, was zu einer dauerhaften Korrektur der Aberration des Interferenzmusters im Vielstrahlinterferometer führt.

**Fig. 4**

EP 1 076 252 A1

**Beschreibung**

Die Erfindung betrifft ein integriertes optisches Vielstrahlinterferometer nach dem Oberbegriff des Anspruches 1.

Herkömmliche optische Vermittlungseinrichtungen oder Schalter sowie optische Multiplexer und Demultiplexer umfassen eine Verbindungsvorrichtung mit einem bis zu mehreren, dicht zu einander beabstandeten Eingangswellenleitern, die an dem Eingang eines Freistrahlbereiches (Sternkoppler) angeschlossen sind. Der Ausgang des Freistrahlbereiches ist mit einem planaren Wellenleiterphasengitter (AWG-area waveguide grating) verbunden, das eine Reihe von optischen Wellenleitern umfaßt. Die Anzahl dieser Wellenleiter kann mehr als 50 betragen. Es wird dann von dichten Wellenlängenmultiplexern (DWDM-dense wavelength division multiplex) gesprochen. Das Wellenleiterphasengitter ist mit dem Eingang eines zweiten Freistrahlbereiches verbunden, dessen Ausgänge die Ausgänge der Vermittlungseinrichtung oder des Schalters bzw. des Multiplexers oder des Demultiplexers sind (siehe z.B. US 5,136,671).

Die Wellenleiter des Wellenleiterphasengitters unterscheiden sich in der Länge im Vergleich zu ihrem nächsten Nachbar jeweils um einen vorbestimmten festen Betrag. Dies ermöglicht mehrere separate, optisch unterschiedliche Wellenlängen, die jeweils in verschiedene getrennte Eingangsport der Vorrichtung eingespeist werden, miteinander durch Interferenz an einem vorbestimmten Ausgangsport zu kombinieren. Auf diese Art und Weise wird die Vorrichtung als Multiplexer angewendet. Die gleiche Vorrichtung kann auch als Demultiplexer wirken. In diesem Fall liegen mehrere Eingangswellenlängen an einem vorbestimmten Eingangsport der Vorrichtung an. Gegebenenfalls kann ein einziger Eingangsport vorhanden sein. Die Eingangswellenlängen werden jeweils voneinander getrennt und an einen vorbestimmten Ausgangsport der Vorrichtung angelegt. Falls mehrere Eingangsporte vorhanden sind, ermöglicht eine geeignete Auswahl der Eingangswellenlängen auch ein Vermitteln oder Schalten zwischen einem ausgewählten beliebigen Eingangsport und einem ausgewählten beliebigen Ausgangsport.

Solche optischen Frequenzmultiplexer/-demultiplexer können z.B. in SiO$_2$/Si-Technologie in Form von sogenannten optischen Phasen Feldern (phasar - phase area) hergestellt sein. Dabei wird auf einem Siliziumsubstrat eine Schicht (buffer layer) von z.B. 15 μm aus SiO$_2$ durch Oxidation unter Hochdruckdampf gewachsen. Sie dient zur Isolierung vom Silizium-substrat, das eine sehr hohe Brechzahl aufweist. Eine zweite Schicht (core layer) aus gedoptem Glas, z.B. mit Phosphor oder Germanium, wird auf das Oxid draufgelegt. In dieser letzteren Schicht wird durch Trockenätzen das Vielstrahlinterferometer, d.h. die Freistrahlbereiche und alle Wellenleiter des Wellenleiterphasengitters, einstrukturiert, und danach mit einer Schicht von mehreren Mikrometern Dicke aus Phosphor oder Bor gedoptes Glas überdeckt. Die typische Breite vom Kern eines Wellenleiters des Phasengitters befindet sich im Bereich von 4,5 - 6,5 μm. Der typische Entkopplungsabstand von benachbarten Wellenleitern des Wellenleiterphasengitters beträgt 30 μm vom Zentrum zum Zentrum der jeweiligen Wellenleiter. Zudem weisen die Wellenleiter des Phasengitters in der Ebene in der sie einstrukturiert sind, eine kreisbogenartige Form mit z.B. einem minimalen Krümmungsradius von ungefähr 15 mm auf.

Der Verlust beim Kombinieren (Multiplexer) oder Trennen (Demultiplexer) von Lichtsignalen, die Wellenlängen im Bereich von 1.200 nm bis zu 1.600 nm aufweisen und sich voneinander nur z. B. bis zu 0,4 nm oder 0,2 nm unterscheiden, ist stark abhängig von der Qualität des aus den Wellenleitern des Phasengitters ausstrahlenden Lichtsignalen am Freistrahlbereich erzeugten Interferenzmusters abhängig. Selbst mit modernster Technik ist bei der Herstellung von Phasengittern aus einer Vielzahl von Wellenleitern mit fest definierter optischer Länge schwerlich eine gewisse Aberration des Interferenzmusters im Freistrahlbereich zu vermeiden.

Aus der EP 756 184 A2 ist eine Abstimmvorrichtung für ein integriertes optisches Vielstrahlinterferometer zur Korrektur der Aberration des Interferenzbildes im Freistrahlbereich bekannt. Die Abstimmvorrichtung beruht auf der Ausnützung von thermooptischen Effekten, die die Kernbrechzahl der Wellenleiter beeinflußt. Die Abstimmungvorrichtung besteht aus einer Elektrodenstruktur, die über einen Bereich des Wellenleiterphasengitters aufgebracht ist. Das Erzeugen einer gewissen Wärme durch diese Elektrodenstruktur verursacht eine Änderung des Brechungsindexes des davon gedeckten Kernes von den jeweiligen Wellenleitern. Dadurch läßt sich deren optisch wirksame Länge verändern (trimmen), was zur Verschiebung des Interferenzmusters der Lichtsignale im Freistrahlbereich führt.

In der EP 662 621 B1 ist eine steuerbare Phasenschiebeeinrichtung der verschiedenen Wellenleiter eines Phasengitters offenbart. Mit Hilfe dieser steuerbaren Phasenschiebeeinrichtung kann gezielt eine Phasenverschiebung einer in einem bestimmten Wellenleiter geführten optischen Welle erzeugt werden. Es kann von Wellenleiter zu Wellenleiter eine unterschiedlich starke Phasenverschiebung erzeugt werden.

Solche steuerbaren Abstimmvorrichtungen haben den großen Nachteil, daß das Phasengitter mit zusätzliche Elektronik versehen sein muß, um diese Abstimmvorrichtung zu bedienen. Dies verursacht erhöhten Kosten, und birgt die Gefahr, daß diese Elektronik versagen könnte, was zu einer unbrauchbaren Abstimmvorrichtung führen würde. Eine Alternative ist aus dem Aufsatz "An all-fiber dense-wavelength-division multiplexer/demultiplexer using photoimprinted Bragg gratings" von F.Bilodeau et al. in IEEE Photonics Technology Letters, **7** (1995), Seiten 388f bekannt. Sie beruht auf der Änderung (das Trimmen) der Kernbrechzahl einer Glasfaser durch Bestrahlung nachdem sie vorab mit $H_2$-Moleküle gedopt wurde, um die Effizienz dieser Bestrahlung zu erhöhen. Nur mit Hilfe diesen als Katalysator verwendeten $H_2$-Moleküle kann eine Änderung der Brechzahl um mindestens $10^{-3}$ erzielt werden. Dabei diffundieren diese Moleküle mit der Zeit aus der gedopten Probe von alleine heraus. Dieses Verhalten wird sogar unterstüzt, in dem die Probe meistens durch erhitzen nachträglich ausgeheilt (annealing) wird. Doch führt dies zu einer Änderung der Bragg-Wellenlänge, die beim planaren Wellenleiterphasengitter zentrale Wellenlänge genannt sind. Deshalb ist es unmöglich vorherzusagen, im welchen Bereich genau die nach diesem Verfahren behandelte Probe arbeiten wird. Dies macht ein solches Trimmen sehr problematisch und unzuverlässig.

Der Erfindung liegt die Aufgabe zugrunde ein Wellenleiterphasengitter eines integrierten optischen Vielstrahlinterferometer derart weiter zu entwikkeln, daß die Aberrationen der Interferenzmuster im Vielstrahlinterferometer minimiert sind, und dies auf kontrollierter Weise.

Die Aufgabe wird durch ein Wellenleiterphasengitter gemäß Anspruch 1.

Allein durch die gezielte Bestrahlung mit UV von Bereichen von einigen Wellenleitern des Phasengitters wird in diesen Bereichen die Kernbrechzahl erniedrigt. Damit läßt sich die Aberration des Interferenzmusters im Freistrahlbereich minimieren. Da einzelne Bereiche der Wellenleiter durch Fokussierung des UV-Strahles behandelt werden können, ist es möglich die Bestrahlung selektiv in Abhängigkeit der gemessenen Werte der kombinierten oder getrennten Lichtsignale am angeschlossenen integrierten optischen Vielstrahlinterferometer vorzunehmen. Somit läßt sich leicht das Phasengitter trimmen, um z.B. bei bestimmten Wellenlängen die Verluste, die im Übergang vom Phasengitter zu den jeweiligen Wellenleitern im Freistrahlbereich vorkommen, zu minimieren.

Es hat sich gezeigt, daß diese erfindungsgemäße Behandlung des Phasengitters mit UV-Strahlung ohne diese Bereiche vorab mit $H_2$-Moleküle zu dopen, eine kontrollierte Änderung (Minderung oder Erhöhung) der Kernbrechzahl dieser Bereiche ermöglicht. Dadurch können solche integrierte optische Vielstrahlinterferometer sehr genau getrimmt werden, und weisen dadurch eine deutlich bessere Arbeitsweise durch niedrige Verlustrate und Mischrate der bearbeiteten optischen Signale.

Vorteilhafte Ausgestaltungen der Erfindung ergeben sich aus den abhängigen Ansprüchen, der nachfolgenden Beschreibung und der Zeichnung.

Ein Ausführungsbeispiel der Erfindung wird nun unter Zuhilfenahme der beiliegenden Zeichnung weiter erläutert.

Es zeigen:

Fig. 1   eine Draufsicht eines integrierten optischen Vielstrahlinterferometers,

Fig. 2   eine schematische Darstellung eines Freistrahlbereiches des Vielstrahlinterferometers nach Fig. 1,

Fig. 3   eine schematische Darstellung eines Freistrahlbereiches des Vielstrahlinterferometers nach Fig. 1,

Fig. 4   eine schematische Darstellung des Vielstrahlinterferometers nach Fig. 1 mit dem UV-Strahl zu dessen Trimmen.

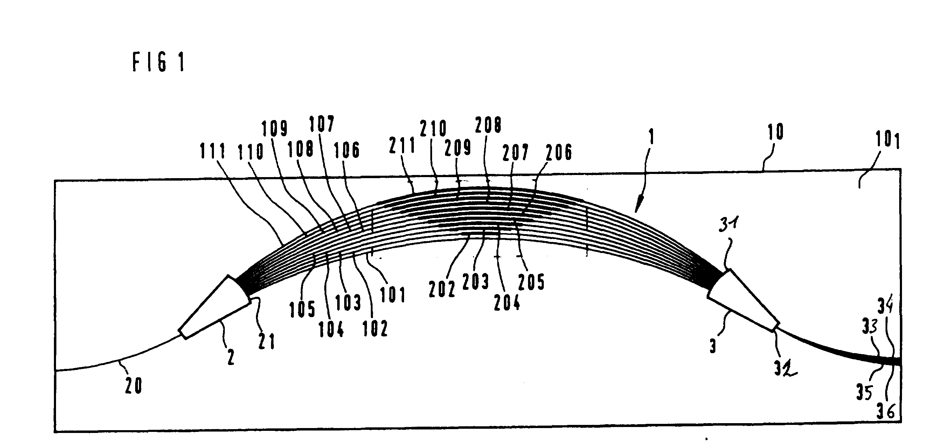

Das in der Fig. 1 in Draufsicht dargestellte integrierte optische Vielstrahlinterferometer ist in der Ebene $10_1$ einer Schicht einstrukturiert, die von einem Substrat 10 getragen ist. Das Interferometer beinhaltet ein Phasengitter 1, das aus einer Vielzahl von nah beieinander integrierten optischen Wellenleitern gebildet ist. An den jeweiligen Enden dieses Phasengitters ist jeweils ein Freistrahlbereich 2, 3 einstrukturiert. Ein Lichtsignal, das aus einer Überlagerung von mehreren optischen Wellenlängen gebildet ist, wird über einen integrierten Wellenleiter 20 vom abgewandten Ende des einen Freistrahlbereiches 2 zugeführt oder entnommen, in Abhängigkeit ob das Interferometer entweder als Demultiplexer oder Multiplexer verwendet wird.

An dem zweiten Freistrahlbereich 3 befinden sich an dem vom Phasengitter 1 abgewandten Ende mehrere Wellenleiter 33 bis 36 zur Entnahme oder Einspeisung von optischen Lichtsignalen, deren Wellenlängen jeweils getrennt wurden, bzw. zu überlagern sind.

Im folgenden beschränken wir uns auf die Beschreibung eines Demultiplexers, d.h. ein Vielstrahlinterferometer, das zur Trennung eines Lichtsignals aus mehreren übergelagerten, unterschiedlichen Wellenlängen in mehrere Lichtsignale aus jeweils einer bestimmten Wellenlänge verwendet wird. In diesem Fall wird das Lichtsignal S, das z.B. aus der Überlagerung von vier unterschiedlichen Wellenlängen $\lambda_1$, $\lambda_2$, $\lambda_3$ und $\lambda_4$ besteht, über die Wellenleiter 20 am Freibereich 2 des Interferometers eingespeist. Die vier in den jeweiligen Wellenlängen getrennten Lichtsignale verlassen dann das Interferometer über vier Wellenleiter 33 bis 36, die am zweiten Freibereich 3 des Interferometers angeschlossen sind. Alle im folgenden beschriebenen Eigenschaften des Interferometers gelten auch für einen erfindungsgemäßen Multiplexer, nur daß dann Lichtsignale über die Wellenleiter 33 bis 36 im Interferometer eingespeist werden und nach deren Überlagerung in einem einzigen optischen Lichtsignal das Interferometer über den Wellenleiter 20 verlaßen.

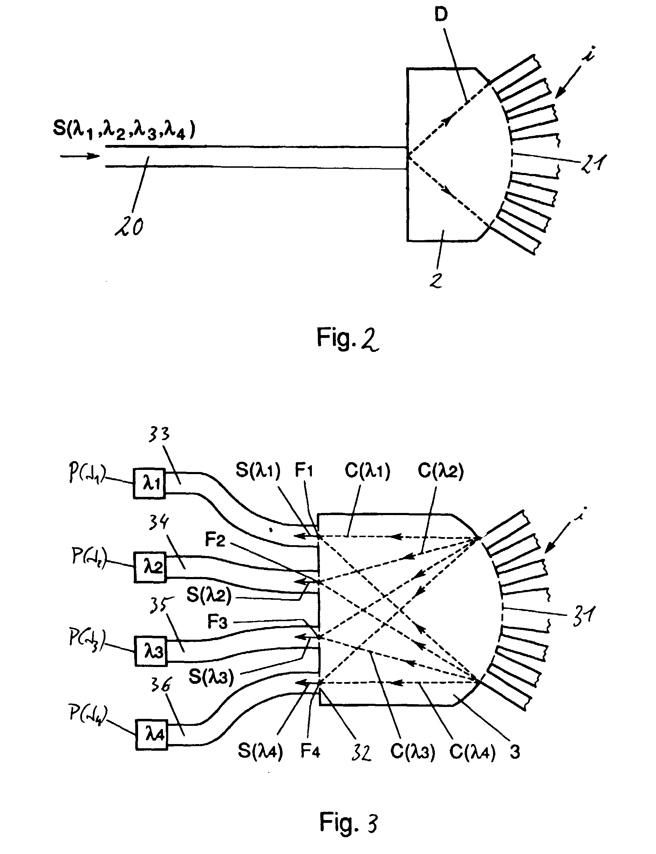

Zwischen den zwei Freistrahlbereichen 2, 3 befindet sich integriert in einer Schicht aus z.B. $SiO_2$ das Phasengitter 1, das auch als planare Wellenleiterphasengitter (AWG) bezeichnet wird. Es besteht aus einer Vielzahl von $N$ Wellenleitern, die ohne zu überlappen und in geringen Abstand zueinander angeordnet sind. In Fig. 1 sind als Beispiel 11 Wellenleiter 101 bis 111 dargestellt. Die jeweiligen Enden dieser Wellenleiter 101 bis 111 münden jeweils auf der Stirnfläche 21, 31, des jeweiligen Freistrahlbereiches 2, 3. Wie aus Fig. 2 und 3 zu erkennen ist, sind diese Stirnflächen 21, 31 vorzugsweise als Kreisbogen ausgeführt. Die jeweiligen Enden der $N$ Wellenleiter sind gleichmäßig auf diesem Kreisbogen 21, 31 verteilt.

In Fig. 2 ist der Freistrahlbereich 2 des Interferometers mit dem Eingangswellenleiter 20 dargestellt. Über den Eingangswellenleiter 20 wird das optische Signal $S(\lambda_1, \lambda_2, \lambda_3, \lambda_4)$ im Freistrahlbereich 2 an dessen der Stirnfläche 21 gegenüberliegenden Ende eintreten. Dabei wird das Lichtsignal S in einem Konus D im Freistrahlbereich 2 divergieren, und zu dessen kreisförmig gebildeter Stirnfläche 21 gerichtet sein. Dieser Brennpunkt ist mit der Stirnfläche 21 verschmolzen. In jedem der Wellenleiter i des Phasengitters 1 wird dann aus der Stirnfläche 21 ein Teil des divergierenden Strahles D des optischen Signals S eindringen.

In allen $N$ Wellenleitern pflanzt sich das eingedrungene Lichtsignal bis zur Stirnfläche 31 des Freibereiches 3 fort. Dabei ist jedes Lichtsignal in den Wellenleitern 101 bis 111 immer noch eine Überlagerung der vier Wellenlängen $\lambda_1$, $\lambda_2$, $\lambda_3$ und $\lambda_4$ des vom Eingangswellenleiter 20 übertragenen Signals S.

Aus der Fig. 1 ist zu erkennen, daß die Wellenleiter 101 bis 111 des Phasengitters 1 kreisförmig in der Ebene des Substrates 10 ausgerichtet sind. Dadurch ergibt sich zweckmäßiger Weise, daß die Wellenleiter 101 bis 111 sich in deren optischen Länge untereinander unterscheiden. Der Wellenleiter 101 mit kleinstem Krümmungsradius weist entsprechend die kleinste optische Länge auf. Die jeweilige optische Länge wächst zusammen mit dem Krümmungsradius von Wellenleiter zu Wellenleiter bis zu einem Maximum beim Wellenleiter 111 mit dem größten Krümmungsradius. Der Unterschied der optischen Wellenlänge kann ein Bruchteil von einem μm bis hin zu einigen μm betragen.

An der Stirnfläche 31 des Freistrahlbereiches 3 münden auf gleicher Art und Weise die Wellenleiter i wie an der Stirnfläche 21 des Freistrahlbereiches 2. Entsprechend ist die Stirnfläche 31 auch kreisförmig ausgebildet (Fig. 3). Da die Lichtsignale, die von den Wellenleitern i übertragen sind, aus dem selben Lichtsignal S stammen, vermischen sich diese Lichtsignale im Freistrahlbereich 3 auf kohärenter Weise. Es entsteht ein Interferenzmuster auf der Brennfläche 32 des Freistrahlbereiches 3 gegenüber der Stirnfläche 31. Die unterschiedlichen optischen Weglängen der Wellenleiter i führen dazu, daß die Lichtsignale C mit bestimmten Wellenlängen $\lambda$ an unterschiedlichen Brennpunkten F konvergieren. Für ein im Vielstrahlinterferometer eintretendes Lichtsignal S, daß aus der Überlagerung von z. B. vier Wellenlängen $\lambda_1$, bis $\lambda_4$ besteht, werden sich dann im Freistrahlbereich 3 vier konvergierende Lichtsignale $C(\lambda_1)$ bis $C(\lambda_4)$ ausbilden. Die Maxima der konvergierenden Lichtsignalen $C(\lambda_1)$ bis $C(\lambda_4)$ befinden sich an separaten Brennpunkten $F_1$ bis $F_4$ auf der selben Brennfläche 32. Zentriert um diese Brennpunkte $F_1$ bis $F_4$ sind die vier Ausgangswellenleiter 33 bis 36 an der Brennfläche 32 des Freistrahlbereiches 3 angeschlossen. Über diese Ausgangswellenleiter 33 bis 36 werden die jeweils getrennten Lichtsignale $S(\lambda_1)$ bis $S(\lambda_4)$ übertragen. Bei der Ausführung des Phasengitters 1 auf dem Silizium-Substrat ist es unmöglich zu verhindern, daß eine gewisse Aberration des Interferenzmusters an der Brennfläche 32 entsteht. Dies führt einerseits zu erhöhten Verlusten von optischen Signalen im Vielstrahlinterferometer sowie zu einer beträchtlichen gegenseitigen Kopplung zwischen benachbarten Ausgangswellenleitern 33 bis 36. Dadurch entsteht eine unerwünschte Zunahme des Nebensprechens zwischen den Kanälen, die durch eine bestimmte Wellenlänge $\lambda_1$, bis $\lambda_4$ charakterisiert sind. Es besteht nur eine geringere Effizienz bei der Übertragung von optischer Leistung zwischen ausgewählten Eingangsports (falls mehrere vorhanden sind) zu ausgewählten Ausgangsports der Vorrichtung.

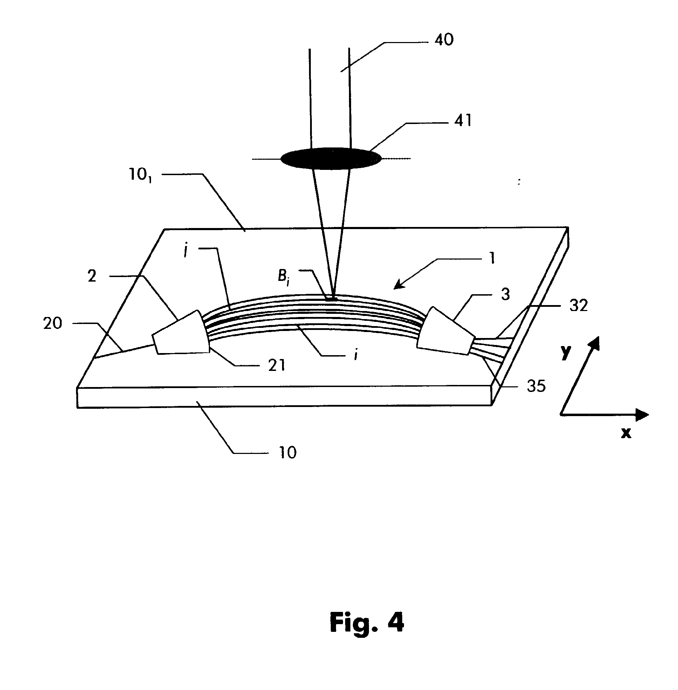

Um dieser Aberration entgegenzuwirken, wird die gesamte Platte, die das Vielstrahlinterferometer enthält an einen Testapparat angeschlossen. Ein Lichtsignal $S(\lambda_1, \lambda_2, \lambda_3, \lambda_4)$ wird am Eingangswellenleiter 20 eingespeist. Über Photodetektoren $P(\lambda_1)$ bis $P(\lambda_4)$, die an den jeweiligen Ausgangswellenleiter 33 bis 36 angeschlossen sind (s. Fig.3), werden dann die getrennten Lichtsignale gemessen. In Abhängigkeit der an den Photodetektoren $P(\lambda_1)$ bis $P(\lambda_4)$ gemessenen Daten wird beschlossen das Phasengitter 1 zu trimmen. Dies wird erfindungsgemäß mit einem optischen Strahl 40 durchgeführt. Hierfür wird der optische Strahl 40, der senkrecht zu der Ebene $10_1$ in der das Vielstrahlinterferometer sich befindet, angeordnet ist, über eine mikroskopische Linse 41 auf einen gewissen Bereich $B_i$ eines bestimmten Wellenleiters i des Phasengitters 1 fokussiert (s. Fig.4). Dabei wird entweder der fokussierte UV-Strahl entsprechend gesteuert, um diesen Bereich $B_j$ des Wellenleiters i behandeln zu können, oder es wird bei fest fokussiertem Strahl die Platte, die das Vielstrahlinterferometer enthält, in der Ebene bewegt. Im beiden Fällen wird der Brennpunkt des fokussierten Strahles über einen bestimmten Bereich $B_i$ des Wellenleiters fahren. Dieses Verfahren kann auf mehreren Wellenleitern i ausgewendet werden. Die jeweiligen bestrahlten Bereiche $B_i$ können gleiche oder unterschiedliche Längen $L_{Bi}$ aufweisen. Die UV-Strahlung führt zu einer Änderung der Kernbrechzahl im Bereich $B_i$ des Wellenleiters i. Der Unterschied $\Delta n_i$ zwischen der Kernbrechzahl $N_{Bi}$ eines Bereiches $B_i$ eines Wellenleiters j und der Kernbrechzahl $N_i$ des jeweiligen restlichen Wellenleiters i beträgt im Betrag mindestens $10^{-4}$. Diese Änderung der Kennbrechzahl in einigen oder allen Wellenleitern j des Phasengitters 1 führt zu einer bestimmten Phasenverschiebung $\Delta_i$ des über die jeweiligen Wellenleiter i übertragenen Lichtsignals. Diese Phasenverschiebung $\Delta\varphi_i$

ist zudem abhängig von der Länge $L_{Bi}$ des bestrahlten Bereiches $B_i$. Vorteilhafterweise ergibt sich ein linearer Zusammenhang zwischen der Phasenverschiebung $\Delta\varphi_i$ und der Länger $L_{Bi}$. Für eine gegebene Wellenlängen $\lambda$ des Lichtsignales haben wir folgendes Gesetz:

$$\Delta\varphi_i = \frac{2\pi}{\lambda} \cdot L_{Bi} \cdot \Delta n_i$$

Die Brechzahländerung pro Länge kann im Mittel um ungefähr einen Radient pro mm betragen. Damit läßt sich die Aberration am Interferenzmuster für einzelne Wellenlängen sehr genau korrigieren. Zudem verursacht dieses Verfahren ein irreversibles Trimmen des Phasengitters. Die Eigenschaft der Bereichen $B_i$ der jeweiligen Wellenleiter $i$ ändert sich nicht mehr nachdem das Verfahren des Trimmen abgeschlossen wurde. Dies ist nur möglich in dem keine Dotierung mit z. B. $H_2$-Moleküle vorgenommen wurde und die Bereiche $B_i$ allein nur durch UV-Strahlung bestrahlt wurden.

In Fig. 1 ist das Phasengitter 1 mit den bestrahlten Bereichen $B_i$ der einzelnen Wellenleiter 102 bis 111 schematisch dargestellt, wie es durch Phasenkontrastmessungen sichtbar wäre. Eindeutig zu erkennen sind die unterschiedlichen Längen $L_{Bi}$ dieser Bereiche $B_i$, der vom Wellenleiter mit zweitkleinstem Krümmungsradius 102 bis zum Wellenleiter 111 mit größtem Krümmungsradius stetig steigt. In diesem Fall sind nur 10 der 11 Wellenleiter mit UV-Strahlung bestrahlt worden. Das Phasengitter 1 weist entsprechend 10 Bereiche 202 bis 211 bei denen die Kernbrechzahl durch UV-Strahlung gemindert oder erhöht wurde auf.

Mit Hilfe dieses erfindungsgemäßen Verfahren zum Trimmen eines Wellenleiterphasengitters kann sehr genau beliebige Aberration am Interferenzmuster des Vielstrahlinterferometers korrigiert werden. Dieses Verfahren hat zudem den erheblichen Vorteil nur ein einziges Mal durchgeführt werden zu müssen, d.h., daß nach gegebenenfalls mehreren Vorgängen in denen die Wellenleiter mit UV-Strahlung bestrahlt wurden, und das Interferometer befriedigend getestet wurde, es auf Dauer getrimmt bleibt. Bei der Behandlung der Wellenleiter i des Phasengitters 1 mit UV-Strahlung kann unterschiedliche Intensität dieser Strahlung und/oder unterschiedlich lang auf der Stelle bestrahlt werden. Die Behandlung eines einzigen Wellenleiters $i$ muß nicht zweckmäßig kontinuierlich sein. Es können auch mehrere, separate Bereiche $B_i$ am selben Wellenleiter $i$ erfindungsgemäß behandelt werden.

**Patentansprüche**

1.  Integriertes optisches Vielstrahlinterferometer mit einem Wellenleiterphasengitter (1) aus einer Vielzahl von N Wellenleitern ($i$),
    **dadurch gekennzeichnet, daß**
    zum Trimmen des Vielstrahlinterferometers mindestens einer ($i$) dieser Wellenleiter ($i$) über einen Bereich ($B_i$) entlang dessen optischer Weglänge ($L_i$) verfügt, der nur durch eine dessen Kernbrechzahl ($n_i$) verändernde Bestrahlung behandelt ist.

2.  Vielstrahlinterferometer, nach Anspruch 1,
    **dadurch gekennzeichnet, daß**
    mindestens $N$-$1$ Wellenleiter ($i$) dieser Wellenleiter ($i$) jeweils über einen Bereich ($B_i$) entlang der jeweiligen optischen Weglängen ($L_i$) verfügen, die nur durch eine deren Kernbrechzahl ($n_i$) verändernde Bestrahlung behandelt sind.

3.  Vielstrahlinterferometer, nach Anspruch 1,
    **dadurch gekennzeichnet, daß**
    die Bestrahlung mit einem im ultravioletten (UV) Bereich charakterisierten optischen Strahl erfolgt.

4.  Vielstrahlinterferometer, nach Anspruch 1,
    **dadurch gekennzeichnet, daß**
    der Bereich ($B_i$) geeignet ist, eine definierte Phasenverschiebung ($\Delta\varphi_i$) für ein in diesem Wellenleiter ($i$) geführtes Lichtsignal zu erzeugen, wobei zwischen der Phasenverschiebung ($\Delta\varphi_i$) des behandelten Wellenleiters ($i$) und der Länge ($L_{Bi}$) des entsprechenden Bereiches ($B_i$) ein monotoner, insbesondere linearer Zusammenhang besteht.

5.  Vielstrahlinterferometer, nach Anspruch 1,
    **dadurch gekennzeichnet, daß**
    die Bereiche ($B_i$) von Wellenleitern zu Wellenleitern unterschiedliche Längen ($L_{Bi}$) aufweisen.

6.  Vielstrahlinterferometer, nach Anspruch 1,
    **dadurch gekennzeichnet, daß**
    der Unterschied ($\Delta n_i$) zwischen der Kernbrechzahl ($n_{Bi}$) der mindestens zwei behandelten Bereiches ($B_i$) der Wellenleiter ($i$) und der Kernbrechzahl ($n_i$) außerhalb diesen behandelten Bereiche ($B_i$) nicht gleich sei.

7.  Vielstrahlinterferometer, nach Anspruch 1,
    **dadurch gekennzeichnet, daß**
    der behandelte Bereich ($B_i$) des mindestens einen Wellenleiters ($i$) eine kleinere Kernbrechzahl ($n_{Bi}$) im Vergleich zu der Kernbrechzahl ($n_i$) des Wellenleiters ($i$) außerhalb dieses behandelten Bereiches ($B_i$) aufweist.

8.  Vielstrahlinterferometer, nach Anspruch 7,
    **dadurch gekennzeichnet, daß**
    der Unterschied ($\Delta n_i$) zwischen der Kernbrechzahl ($n_{Bi}$) eines behandelten Bereiches ($B_i$) eines Wellenleiters ($i$) und der Kernbrechzahl ($n_i$) des Wellenleiters ($i$) außerhalb dieses behandelten Bereiches ($B_i$) mindestens $-10^{-4}$ beträgt.

FIG 1

$S(\lambda_1, \lambda_2, \lambda_3, \lambda_4)$

D

*i*

21

20

2

Fig. 2

33

$P(\lambda_1)$  λ1

$S(\lambda_1)$  F1  $C(\lambda_1)$  $C(\lambda_2)$

34

$P(\lambda_2)$  λ2

F2

*i*

$S(\lambda_2)$

35

31

$P(\lambda_3)$  λ3

F3

$S(\lambda_3)$

36

$P(\lambda_4)$  λ4

$S(\lambda_4)$  F4  32  $C(\lambda_3)$  $C(\lambda_4)$  3

Fig. 3

**Fig. 4**

Europäisches
Patentamt

**EUROPÄISCHER RECHERCHENBERICHT**

Nummer der Anmeldung

EP 99 44 0223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | ZAUNER D A ET AL: "UV TRIMMING OF ARRAYED-WAVEGUIDE GRATING WAVELENGTH DIVISION DEMULTIPLEXERS" ELECTRONICS LETTERS,GB,IEE STEVENAGE, Bd. 34, Nr. 8, Seite 780-781 XP000781460 ISSN: 0013-5194 * das ganze Dokument * | 1-8 | G02B6/293 |
| X | EP 0 730 170 A (AT & T CORP) 4. September 1996 (1996-09-04) * Zusammenfassung; Abbildungen 1,2 * * Seite 5, Zeile 22 - Zeile 35 * * Seite 5, Zeile 58 - Seite 6, Zeile 27 * | 1-3 | |
| A | | 4-8 | |
| X | EP 0 297 851 A (NIPPON TELEGRAPH & TELEPHONE) 4. Januar 1989 (1989-01-04) * Zusammenfassung; Abbildung 3 * * Spalte 7, Zeile 15 - Zeile 33 * * Spalte 12, Zeile 32 - Zeile 34 * | 1 | |
| A | | 2-8 | RECHERCHIERTE SACHGEBIETE (Int.Cl.7) |
| A | US 5 118 923 A (FARINA JAMES D) 2. Juni 1992 (1992-06-02) * Zusammenfassung; Abbildung 5 * * Spalte 2, Zeile 3 - Zeile 63 * | 1-8 | G02B |

Der vorliegende Recherchenbericht wurde für alle Patentansprüche erstellt

| Recherchenort | Abschlußdatum der Recherche | Prüfer |
|---|---|---|
| DEN HAAG | 14. Januar 2000 | Jakober, F |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 99 44 0223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2000

| Im Recherchenbericht angeführtes Patentdokument | Datum der Veröffentlichung | Mitglied(er) der Patentfamilie | Datum der Veröffentlichung |
|---|---|---|---|
| EP 0730170 A | 04-09-1996 | US 5625723 A<br>AU 4568796 A<br>CA 2165712 A<br>JP 8304651 A | 29-04-1997<br>05-09-1996<br>29-08-1996<br>22-11-1996 |
| EP 0297851 A | 04-01-1989 | JP 1077002 A<br>JP 1984285 C<br>JP 7018964 B<br>CA 1317135 A<br>DE 3877842 A<br>US 4900112 A<br>US 4978188 A | 23-03-1989<br>25-10-1995<br>06-03-1995<br>04-05-1993<br>11-03-1993<br>13-02-1990<br>18-12-1995 |
| US 5118923 A | 02-06-1992 | KEINE | |

Für nähere Einzelheiten zu diesem Anhang : siehe Amtsblatt des Europäischen Patentamts, Nr.12/82

EPO FORM P0461